(19) 

Europäisches
Patentamt

European
Patent Office

Office européen
des brevets

(11) **EP 4 625 552 A1**

(12) **EUROPEAN PATENT APPLICATION**
published in accordance with Art. 153(4) EPC

(43) Date of publication:
**01.10.2025 Bulletin 2025/40**

(21) Application number: **23913041.2**

(22) Date of filing: **29.12.2023**

(51) International Patent Classification (IPC):
**H01M 4/92** (2006.01)    **H01M 4/90** (2006.01)
**C01B 32/15** (2017.01)

(52) Cooperative Patent Classification (CPC):
**C01B 32/15; H01M 4/90; H01M 4/92; H01M 8/10;
Y02E 60/50**

(86) International application number:
**PCT/KR2023/022037**

(87) International publication number:
**WO 2024/144367 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **29.12.2022  KR 20220189114**

(71) Applicant: **The Carbon Studio Inc.
Daejeon 34015 (KR)**

(72) Inventors:
- **PARK, Jae-Hyun**
  **Daegu 42093 (KR)**
- **BAE, Young-Kyu**
  **Daejeon 34809 (KR)**
- **LEE, Gil-Hwan**
  **Daejeon 34010 (KR)**

(74) Representative: **Schmidt, Steffen J.
Wuesthoff & Wuesthoff
Patentanwälte und Rechtsanwalt PartG mbB
Schweigerstrasse 2
81541 München (DE)**

(54) **POROUS CARBON SUPPORT AND CATALYST FOR FUEL CELL**

(57)    The present disclosure relates to a porous carbon body and, more specifically, to a porous carbon body that satisfies the surface area properties of pores with a size of 2-5 nm, the surface area properties of pores with a size of 2-100 nm, and physical properties in an overlapping graph of a first pore volume distribution graph obtained from nitrogen adsorption isotherms and a second pore volume distribution graph obtained from nitrogen desorption isotherms.

[FIG. 1]

EP 4 625 552 A1

## Description

Technical Field

The present disclosure relates to a porous carbon support and a catalyst for a fuel cell using the same.

The national research and development projects that supported the present disclosure are as follows.

Project ID 1711182201
Project No. 2021M3H4A1A02049886
Ministry of Science and ICT
Project Management (Specialized) Organization Name National Research Foundation of Korea
Research Project Name: Nanomaterial Technology Development / Seon Do Hyung
Research Project Name: Development of High-crystalline porous carbon carrier synthesis technology Based on Low-temperature process
Contribution rate 0.5
Project execution organization name: The Carbon Studio Co., Ltd.
Research period: 2023-01-01 ~ 2023-12-31
Project ID 1415186363
Project No. 20020437
Ministry of Trade, Industry and Energy
Project Management (Specialized) Agency Name Korea Institute of Industrial Technology Planning and Evaluation
Research Project Name: Nano-Fusion Innovation Product Technology Development
Research Project Name: Development of Hydrogen Electric Vehicle Fuel Cell Module Technology Based on Production of Platinum Alloy Nano-Catalyst having MEA Platinum Usage 0.2gkW or Less
Contribution rate 0.5
Project execution organization name: The Carbon Studio Co., Ltd.
Research period: 2023-01-01 ~ 2023-12-31

Background Art

A Polymer Electrolyte Membrane Fuel Cell (PEMFC) is attracting attention as an energy source that can replace fossil fuels, since the PEMFC has high energy efficiency and is environmentally friendly.

A PEMFC is a power generation system which produces electricity through an electrochemical reaction of hydrogen and oxygen using a catalyst, and has a structure in which unit cells including a membrane electrode assembly (MEA) and a bipolar plate are stacked. A MEA has a structure in which a cation exchange membrane (also called a polymer electrolyte membrane) is inserted into an anode and a cathode.

An important factor determining the performance of a fuel cell is a catalyst used to form the electrodes (anodes, cathodes) of the MEA, which is generally used by supporting platinum-based catalyst particles on a porous carbon support.

A porous carbon support not only supports catalyst particles, but also affects catalytic performance. For example, an amount of catalyst particles supported thereon is determined by a specific surface area of the carbon support, and the stability and durability of the entire fuel cell are affected by a degree of deterioration of the carbon support. Above all, a structure of pores of the carbon support has a great influence on a degree of dispersion of the catalyst particles supported, a size of the catalyst particles, a position of the catalyst particles within the support, gas diffusivity, a degree of flooding, and the power generation performance depending on the fuel cell operating conditions (e.g., high temperature and low humidity conditions), and therefore, various studies are being conducted to control the size and structure of pores of the carbon support.

However, there are still various interpretations, including conflicting interpretations, regarding an advantageous structure of pores of the porous carbon support, and the advantageous structure of pores has not yet been established.

Summary of Invention

Technical Problem

An aspect of the present disclosure is to provide a porous carbon body that can exhibit improved catalytic durability when used as a fuel cell catalyst support.

An object of the present disclosure is not limited to the above description. The object of the present disclosure will be understood from the entire content of the present specification, and a person skilled in the art to which the present disclosure pertains will understand an additional object of the present disclosure without difficulty.

Solution to Problem

According to an aspect of the present disclosure, a porous carbon body satisfies the following properties:

Property 1: a surface area of pores having a size of 2 nm or more to 5 nm or less obtained by an $N_2$ desorption isotherm based on a Barrett-Joyner-Halenda (BJH) method based on a Harkins-Jura equation is 100 $m^2/g$ to 500 $m^2/g$,
Property 2: a surface area of pores having a size of 2 nm or more to 100 nm or less obtained by an $N_2$ desorption isotherm based on a BJH method based on a Harkins-Jura equation is 200 $m^2/g$ to 1500 $m^2/g$,
Property 3: based on a BJH method based on a Harkins-Jura method, a superimposed graph of a first pore volume distribution graph obtained by a nitrogen adsorption isotherm and a second pore volume distribution graph obtained by a nitrogen desorption isotherm has three intersection points of P1, P2, and P3 sequentially in a direction in which a diameter thereof increases in a pore diameter range of 2 to 50 nm.

In a specific example, the P3 may be located in a pore diameter range of more than 10 nm to 40 nm or less.
In a specific example, the P2 may be located in a pore diameter range of 5 nm to 25 nm.
In a specific example, in the superimposed graph, an area ratio of an area of a closed curve from P2 to P3 divided by an area of a closed curve from P1 to P2 may be 2.5 or less.
The porous carbon body according to a specific example may further satisfy the following property 4.
Property 4: based on a BJH method based on a Harkins-Jura equation, in a first pore cumulative volume distribution obtained by a nitrogen adsorption isotherm and a second pore cumulative volume distribution obtained by a nitrogen desorption isotherm, a value obtained by subtracting a value of the second pore cumulative volume distribution from a value of the first pore cumulative volume distribution according to a pore diameter has a positive value in a pore diameter range of 2 to 30 nm.
In a specific example, a cumulative delta graph, a graph of the value obtained by subtracting the value of the second pore cumulative volume distribution from the value of the first pore cumulative volume distribution according to the pore diameter, may sequentially include a first decreasing region, a first increasing region, a second decreasing region, and a second increasing region in a direction in which a pore diameter thereof increases.
In a specific example, a boundary between the first increasing region and the second decreasing region may be located in a pore diameter range of 5 nm to 20 nm.
In a specific example, a boundary between the second decreasing region and the second increasing region may be located in a pore diameter range of 10 nm to 30 nm.
In a specific example, the positive value may be 0.05 $cm^3/g$ or more.
The porous carbon body according to a specific example may further satisfy the following property 5.
Property 5: an average interlayer spacing(d002) measured by X-ray diffraction is 0.335 nm to 0.350 nm.
The porous carbon body according to a specific example may further satisfy the following property 6.
Property 6: an a-axis lattice constant ($L_a$) measured by X-ray diffraction is 4 nm to 10 nm.
In a specific example, the porous carbon body may be a porous carbon body doped with a heterogeneous element.
A catalyst for a fuel cell according to the disclosure includes the above-described porous carbon body and a catalyst material supported on the above-described porous carbon body.
A catalyst layer for a fuel cell according to the disclosure contains the above-described catalyst and ionomer.
The present disclosure includes a polymer electrolyte membrane fuel cell including the above-described catalyst.

Advantageous Effects of Invention

According to the present disclosure, a porous carbon body may exhibit improved catalytic durability when used as a fuel cell catalyst support due to a pore structure including an appropriate amount of bottleneck-shaped pores.
According to a specific example, a porous carbon body has a pore structure including an appropriate amount of bottleneck-shaped pores having a wide size range, and thus may exhibit improved catalytic activity and durability when used as a fuel cell catalyst support.
The various advantageous and beneficial advantages and effects of the present disclosure are not limited to the above-described contents, and will be more easily understood in the course of explaining specific embodiments of the present disclosure.

Brief Description of Drawings

FIG. 1 is a diagram illustrating a superimposed graph of a porous carbon body prepared according to an example.
FIGS. 2 and 3 are diagrams illustrating superimposed graphs of comparison samples.
FIG. 4 is a diagram illustrating a cumulative delta graph of a porous carbon body prepared according to an example.
FIGS. 5 and 6 are diagrams illustrating cumulative delta graphs of comparison samples.

Mode for Invention

The terms used in this specification are used to describe the present disclosure and are not intended to limit the present disclosure. In addition, as used herein, singular forms include plural forms unless the relevant definition clearly indicates the contrary.

The meaning of 'including' used in the specification specifies a configuration and does not exclude the presence or addition of another configuration.

Unless otherwise defined, all terms, including technical terms and scientific terms used in this specification, have the same meaning as that which could be commonly understood by those skilled in the art in the technical field to which the present disclosure pertains. Terms defined in the dictionary are interpreted as having meanings consistent with related technical literature and current disclosure.

In the present specification and the appended claims, the terms first, second, etc. are not used in a limiting sense but are used to distinguish one component from another component.

In the present specification and the appended claims, a fuel cell may include a polymer electrolyte membrane fuel cell (PEMFC), a phosphate fuel cell (PAFC), an alkaline fuel cell (AFC), a molten carbonate fuel cell (MCFC), or a solid oxide fuel cell (SOFC). However, since the porous carbon body according to a specific example may exhibit improved durability and catalytic activity when supporting a catalyst material, it may be more effectively utilized in a fuel cell in which an expensive catalyst material is commonly used. Examples of such fuel cells may include a polymer electrolyte membrane fuel cell (PEMFC), a phosphate fuel cell (PAFC), and the like.

In the present specification and the appended patent claims, the pore size classification is based on the definition of the International Union of Pure and Applied Chemistry (IUPAC). Specifically, according to the IUPAC definition, micropores refer to pores having a diameter of 2 nm or less, mesopores refer to pores having a diameter of 2 nm to 50 nm, and macropores refer to pores having a diameter of 50 nm or more.

In the present specification and the appended claims, a nitrogen adsorption/desorption isotherm refers to an isotherm obtained by combining an isotherm of a nitrogen adsorption process (nitrogen adsorption isotherm) and an isotherm of a nitrogen desorption process (nitrogen desorption isotherm) obtained by measuring nitrogen adsorption of a porous carbon body. When described in detail with a graph of an X-axis of the relative pressure of nitrogen ($P/P_0$) and a Y-axis of the nitrogen adsorption amount ($cm^3/g$ STP), the nitrogen adsorption/desorption isotherm has the same X-axis and the same Y-axis, and refers to a graph in which the nitrogen adsorption isotherm and the nitrogen desorption isotherm are plotted together. Hysteresis may refer to a form in which the nitrogen adsorption isotherm and nitrogen desorption isotherm are separated from each other in the nitrogen adsorption-desorption isotherm. In other words, hysteresis may refer to a certain range in which the amount of nitrogen adsorption appears differently at the same relative pressure due to a difference in the nitrogen adsorption process and the nitrogen desorption process.

The present inventors have conducted research on a porous carbon body for a fuel cell catalyst support that satisfies both high porosity and high crystallinity, which are known as a trade-off relationship. In the process of continuously conducting this research, it was found that bottleneck-shaped pores of a porous carbon body for a fuel cell catalyst support are advantageous in improving the durability and catalytic activity of the fuel cell catalyst material, contrary to what was previously known. As a result of conducting in-depth research based on these findings, a pore structure that can improve the durability and activity of a catalyst material while preventing adverse effects that may occur due to bottleneck-shaped pores.

The porous carbon body according to the disclosure satisfies the following properties 1, 2 and 3:

Property 1: a surface area of pores having a size of 2 nm or more to 5 nm or less obtained by an $N_2$ desorption isotherm based on a Barrett-Joyner-Halenda (BJH) method based on a Harkins-Jura equation is 100 $m^2$/g to 500 $m^2$/g,

Property 2: a surface area of pores having a size of 2 nm or more to 100 nm or less obtained by an $N_2$ desorption isotherm based on a Barrett-Joyner-Halenda (BJH) method based on a Harkins-Jura equation is 200 $m^2$/g to 1500 $m^2$/g,

Property 3: based on a BJH method based on a Harkins-Jura equation, a superimposed graph of a first pore volume distribution graph obtained by a nitrogen adsorption isotherm and a second pore volume distribution graph obtained by a nitrogen desorption isotherm has three intersection points of P1, P2, and P3 sequentially in a direction in which a diameter thereof increases in a pore diameter range of 2 to 50 nm.

A pore region having a size of 2 nm or more and 5 nm or less is a region which mainly affects the support of a catalyst material, and the characteristics of the catalyst material supported on a porous carbon body may be determined by a specific surface area of the pore region having a size of 2 to 5 nm.

Since the porous carbon body satisfies property 1, the catalyst material may be supported on the porous carbon body in the form of ultrafine particles of several nanometers (for example, 1 to 3 nm), and the aggregation of the catalyst material may be suppressed, thereby improving the stability and durability of the catalyst.

According to a specific example, the porous carbon body may satisfy a surface area of pores having a size of 2 nm or more to 5 nm or less obtained by the $N_2$ desorption isotherm based on the Barrett-Joyner-Halenda (BJH) method based on the Harkins-Jura equation of 100 $m^2/g$ to 500 $m^2/g$, specifically 100 $m^2/g$ to 400 $m^2/g$, and more specifically 100 $m^2/g$ to 350 $m^2/g$.

The pore region having a size of 2 nm to 100 nm is a region involved in the transport of reaction products of a fuel cell, such as water, and various characteristics of the fuel cell may be affected by the specific surface area of the pore region with a size of 2 nm to 100 nm. Since the porous carbon body satisfies property 2, the reaction products of the fuel cell may be efficiently transported during fuel cell operation.

According to a specific example, the porous carbon body may satisfy a surface area of pores having a size of 2 nm or more to 100 nm or less obtained by the $N_2$ desorption isotherm based on the Barrett-Joyner-Halenda (BJH) method based on the Harkins-Jura equation of 200 $m^2/g$ to 1500 $m^2/g$, specifically 200 $m^2/g$ to 1000 $m^2/g$, more specifically 200 $m^2/g$ to 800 $m^2/g$, and even more specifically 220 $m^2/g$ to 700 $m^2/g$.

According to a specific example, the porous carbon body may satisfy the properties 1 and 2 described above, and at the same time, satisfy the following property 3.

Property 3: based on a BJH method based on a Harkins-Jura equation, a superimposed graph of a first pore volume distribution graph obtained by a nitrogen adsorption isotherm and a second pore volume distribution graph obtained by a nitrogen desorption isotherm has three intersection points of P1, P2, and P3 sequentially in a direction in which a diameter thereof increases in a pore diameter range of 2 to 50 nm.

As is known, the $N_2$ adsorption/desorption isotherm represents a relationship between a nitrogen partial pressure and a nitrogen adsorption amount, and has a value of the adsorption amount ($cm^3/g$ STP) according to the relative pressure ($P/P_0$). By the BJH method based on the Harkins-Jura equation, by converting the nitrogen relative pressure ($P/P_0$) of the adsorption/desorption isotherm into a pore diameter (nm) and the nitrogen adsorption amount ($cm^3/g$ STP) into a pore volume ($cm^3/g$), a pore volume distribution graph may be obtained. Accordingly, the pore volume distribution graph is a semi-log scale graph of the pore volume for each pore diameter (size), and specifically, is a log scale graph having an X-axis of pore diameter (nm) and having a Y-axis of pore volume ($cm^3/g$). The first pore volume distribution graph may be a semi-log scale pore volume distribution graph obtained by the BJH method based on the Harkins-Jura equation from the nitrogen adsorption isotherm obtained by nitrogen adsorption, and the second pore volume distribution graph may be a semi-log scale pore volume distribution graph obtained by the BJH method based on the Harkins-Jura equation from the nitrogen desorption isotherm obtained by nitrogen desorption. The superimposed graph may mean a semi-log scale graph in which the first pore volume distribution graph and the second pore volume distribution graph are plotted together on the same X-axis (nm) which is log scale and the same Y-axis ($cm^3/g$).

Property 3 is a property that can be satisfied when the porous carbon body contains a significant amount of bottleneck-shaped pores (hereinafter, collectively referred to as bottleneck pores) and contains bottleneck pores over a wide size range. A porous carbon body should satisfy property 3 so that the benefits of the intended bottleneck pores can be obtained while suppressing the adverse effects of the bottleneck shape.

In detail, when there is no intersection point or one or two intersection points in the pore diameter range of 2 to 50 nm in the superimposed graph, a degree of development of bottleneck pores is insignificant, it is difficult to have a significant effect when used as a catalyst support. On the other hand, when there are four or more intersection points in the pore diameter range of 2 to 50 nm in the superimposed graph, mesopores including bottleneck pores are excessively developed, making it difficult to transport materials including a gaseous phase within the carbon body and easily causing flooding, making it difficult to prevent adverse effects caused by bottleneck-shaped pores.

Positions of P2 and P3 in the superimposed graph are indicators related to the size of the bottleneck pore. In detail, in the superimposed graph, P3 is an indicator mainly related to a size of an internal pore region in the bottleneck pore, and P2 is an indicator mainly related to a size of a bottleneck region in the bottleneck pore. Furthermore, the positions of P3 and P2 are indicators of a degree of bottleneck shape, i.e., a degree to which it is close to a closed pore.

In the porous carbon body according to a specific example, in the superimposed graph, P3 may be located in a pore diameter range of more than 10 nm to 40 nm or less, specifically 11 nm to 35 nm. A catalyst material supporting space in which a catalyst material is evenly supported inside the bottleneck pores by the position of P3 of more than 10 nm to 40 nm or less, specifically 11 nm to 35 nm, but so that aggregation does not occur inside the pores, may be provided. In addition, oxygen in a gaseous phase, which is a reactant, and water, which is a product, may be efficiently transferred and discharged through a free space. Together therewith, or independently thereof, P2 in the superimposed graph may be located in a pore diameter range of 5 nm to 25 nm, specifically 5 nm to 20 nm. Direct contact between an ion transfer mediator (e.g., ionomer) which is bound to the porous carbon body and penetrates through mesopores to macro pores of the porous carbon body and a catalyst material may be effectively prevented by the position of P2 of 5 nm to 25 nm, specifically 5 nm to 20 nm. In addition, the phenomenon of the catalyst material escaping outside the pores during the fuel cell operation process may be effectively prevented.

In a specific example, a difference between the position of P3 and the position of P2 (position of P3 - position of P2) may be 5 nm to 20 nm, specifically 5 nm to 15 nm. Since the bottleneck pores have the difference between the positions of P3 and P2 as described above, direct contact between the ion transfer medium and the catalyst material may be prevented without interfering with the transfer and discharge of oxygen and water, which are reactants and products, due to the bottleneck shape.

In a specific example, in a 2 nm-P1 region based on the X-axis, a first pore volume distribution graph by a nitrogen adsorption isotherm may be located above (at a larger y value) a second pore volume distribution graph by a nitrogen desorption isotherm. In a P1-P2 region based on the X-axis, the second pore volume distribution graph by the nitrogen desorption isotherm may be located above the first pore volume distribution graph by the nitrogen adsorption isotherm. In a P2-P3 region based on the X-axis, the first pore volume distribution graph by the nitrogen adsorption isotherm can be located above the second pore volume distribution graph by the nitrogen desorption isotherm. In a P3-50 nm region based on the X-axis, the second pore volume distribution graph by the nitrogen desorption isotherm may be located above the first pore volume distribution graph by the nitrogen adsorption isotherm.

That is, three intersection points of P1, P2, and P3 may correspond to boundary points of two regions: a region in which pore volume is larger during desorption than during adsorption (the P1-P2 region) and a region in which pore volume is larger during adsorption than during desorption (the P2-P3 region) in a direction in which pore diameter increases.

By the three intersection points of P1, P2, and P3, the superimposed graph may have a first closed curve by the second pore volume distribution graph located above and the first pore volume distribution graph located below in the P1-P2 region, based on the X-axis, and a second closed curve by the first pore volume distribution graph located above and the second pore volume distribution graph located below in the P2-P3 region, based on the X-axis.

In the superimposed graph, an area ratio of an area of a closed curve (a second closed curve) from P2 to P3 divided by an area of a closed curve (a first closed curve) from P1 to P2 may be 2.50 or less. Specifically, an area ratio $(A_{cl2}/A_{cl1})$ of the area of the second closed curve $(A_{cl2})$ divided by the area of the first closed curve $(A_{cl1})$ may be 0.01 to 2.50, specifically 0.01 to 2.40, more specifically 0.10 to 2.30, and even more specifically 0.40 to 2.30. By satisfying such an area ratio $(A_{cl2}/A_{cl1})$, when used as a support for supporting a catalyst material on a porous carbon body, the porous carbon body may have an improved electrochemical surface area (ESCA), and along therewith, may have significantly improved durability. Although not limited to this interpretation, in the superimposed graph, the area ratio of $A_{cl2}/A_{cl1}$ may be a property related to a size distribution of the bottleneck region of bottleneck pores included in the pore structure of the porous carbon body and a size distribution of the internal pore region. The above-described area ratio may indicate that the pore group having a bottleneck shape (bottleneck pore group) is formed by bottleneck pores and internal pores having a significantly wide size distribution.

According to a specific example, the porous carbon body may further satisfy the following property 4.

Property 4: based on a BJH method based on a Harkins-Jura equation, in a first pore cumulative volume distribution obtained by a nitrogen adsorption isotherm and a second pore cumulative volume distribution obtained by a nitrogen desorption isotherm, a value obtained by subtracting a value of the second pore cumulative volume distribution from a value of the first pore cumulative volume distribution according to a pore diameter has a positive value in a pore diameter range of 2 to 30 nm.

By the BJH method based on the Harkins-Jura equation, the cumulative pore volume distribution may be obtained by converting nitrogen relative pressure $(P/P_0)$ of the nitrogen adsorption/desorption isotherm into a pore diameter (nm) and the accumulated nitrogen adsorption amount ($cm^3$/g STP) to each pore diameter into a cumulative pore volume ($cm^3$/g). In other words, the pore cumulative volume distribution may be obtained by accumulating the pore volume to each pore diameter based on the pore volume distribution graph described above. Accordingly, the pore cumulative volume distribution may also be a semi-log scale graph having an X-axis of pore diameter (nm) in a log scale graph and having a Y-axis of cumulative pore volume ($cm^3$/g). The first pore cumulative volume distribution may be calculated from a pore volume distribution graph obtained by a nitrogen adsorption isotherm, and the second pore cumulative volume distribution may be calculated from a pore volume distribution graph obtained by a nitrogen desorption isotherm.

The cumulative pore volume distribution during nitrogen adsorption and the cumulative pore volume distribution during nitrogen desorption are more sensitive to and can be more greatly affected by a size distribution of bottleneck pores forming a bottleneck pore group than the pore volume distribution graph.

In detail, the value obtained by subtracting the second pore cumulative volume distribution value from the first pore cumulative volume distribution value (hereinafter collectively referred to as the cumulative volume difference) can more directly reflect the size distribution of bottleneck pores forming the bottleneck pore group.

When the pore structure of the porous carbon body includes a significant amount of bottleneck pores as well as bottleneck pores and internal pores of various sizes, a cumulative volume difference can exhibit a positive value in an overall pore diameter range of 2 to 30 nm. Specifically, the cumulative volume difference in the overall pore diameter range of 2 to 30 nm may be 0.05 $cm^3$/g or more, more specifically 0.05 to 2.0 $cm^3$/g, and even more specifically 0.05 to 1.8 $cm^3$/g. The bottleneck pores of various sizes are very advantageous in simultaneously improving catalytic activity represented by electrochemical surface area (ESCA) and mass activity, and catalytic durability represented by the decrease rate of ESCA and the decrease rate of mass activity.

As described above, the cumulative volume difference according to the pore diameter may more directly reflect the size distribution of the bottleneck pores forming the bottleneck pore group. In detail, a graph of a value of the cumulative volume difference according to the pore diameter may be defined as a cumulative delta graph. According to the value of the cumulative volume difference according to the pore diameter, the cumulative delta graph may be a semi-log scale graph having an X-axis of pore diameter (nm) in log scale and having a Y-axis of cumulative volume difference ($cm^3$/g). In this case, the cumulative delta graph may have a pore diameter range of 2 to 30 nm.

In a specific example, the cumulative delta graph may sequentially include a first decreasing region, a first increasing region, a second decreasing region, and a second increasing region in a direction in which a pore diameter increases, and may include the regions continuously.

In the cumulative delta graph, the decreasing region is a region in which the value of the cumulative volume difference decreases when the pore diameter increases, and the increasing region is a region in which the cumulative volume difference value increases when the pore diameter increases.

In detail, the cumulative delta graph may sequentially include, in a direction in which a pore diameter increases, a first decreasing region including a pore diameter of 2 nm, a first increasing region, a second decreasing region, and a second increasing region including a pore diameter of 30 nm in a pore diameter range of 2 to 30 nm. Accordingly, the cumulative delta graph may have a maximum point corresponding to a boundary point between the first increasing region and the second decreasing region, and may have a single maximum point.

A boundary (boundary point) between the first increasing region and the second decreasing region may be located in a pore diameter range of 5 nm to 20 nm. Simultaneously or independently thereof, the boundary between the second decreasing region and the second increasing region may be located in a pore diameter range of 10 nm to 30 nm.

A single maximum point shape of the above-described cumulative delta graph may indicate that the porous carbon body includes bottleneck pores of various sizes, and at the same time, the bottleneck pores are evenly and well-developed over a very wide pore size range, and the bottleneck pores exist over a very wide pore size range and have a well-connected pore structure. In addition, a position of the boundary between the first increasing region and the second decreasing region and a position of the boundary between the second decreasing region and the second increasing region may indicate a size of bottleneck pores and internal pores of this bottleneck structure.

Since the porous carbon body has a pore structure including bottleneck pores of various sizes and well-developed and well-connected to each other for communication therewith over a very wide pore size range, aggregation, elution, poisoning by ionomers, etc. of the catalyst material can be prevented, and the catalyst material may be supported finely and evenly, thereby further improving both catalytic activity and catalytic durability. In addition, by having a pore structure including bottleneck pores of various sizes and well-developed and well-connected to each other for communication therewith over a very wide pore size range, enhanced and rapid supply of a gaseous phase to the particulate catalyst material and enhanced and rapid discharge of a liquid phase derived from the fuel cell reaction may be achieved, and flooding may be effectively prevented. A specific example of the gaseous phase may be a gas participating in an electrochemical reaction of a fuel cell, such as oxygen, air or hydrogen, and a specific example of the liquid phase may be a liquid including a reaction product of the electrochemical reaction of a fuel cell, such as water. However, the present disclosure is not limited to the specific substances of the gaseous phase and the liquid phase.

In a specific example, the porous carbon body may further satisfy the following property 5.

Property 5: an average interlayer spacing ($d_{002}$) measured by X-ray diffraction is 0.335 nm to 0.350 nm.

The average interlayer spacing ($d_{002}$) of a (002) plane is an indicator which directly indicates the crystallinity of carbon forming a porous carbon body. $d_{002}$ of 0.335 nm to 0.350 nm may mean that a pore structure of a porous carbon body including a bottleneck pore group is formed by a carbon skeleton with excellent crystallinity.

Due to the excellent crystallinity of the carbon skeleton, the porous carbon body may have better oxidation resistance. Therefore, when the porous carbon body is used as a fuel cell catalyst support, the catalyst may have improved durability.

Together therewith, or independently thereof, the porous carbon body according to a specific example may further satisfy the following property 6.

Property 6: an a-axis lattice constant ($L_a$) measured by X-ray diffraction is 4 nm to 10 nm, specifically 6 nm to 10 nm, more specifically 7 nm to 10 nm, and even more specifically 7.5 nm to 10 nm.

Property 6 is also related to the crystallinity of the porous carbon body, and a larger $L_a$ value indicates that the carbon skeleton of the porous carbon body is formed of graphite with a wider hexagonal network. Since the porous carbon body satisfies Property 6, it is advantageous in that it can reduce a defect site vulnerable to oxidation.

Together therewith, or independently thereof, the porous carbon body can further satisfy the following property 7.

Property 7: an average number of graphene layers calculated by X-ray diffraction method is 6 to 20, specifically 7 to 15, more specifically 8 to 15.

Property 7 is also related to the crystallinity of the porous carbon body, and an average number of graphite layers is a value calculated by adding 1 to a value obtained by dividing a c-axis lattice constant ($L_c$) by $d_{002}$. It indicates that the larger the average number of graphite layers, the more the carbon skeleton of the porous carbon body is formed as a thicker graphite crystal.

In an advantageous example, the porous carbon body may have excellent crystallinity satisfying all of properties 5, 6, and 7, together with the above-described pore structure. When the porous carbon support has the above-described pore structure and the crystallinity satisfying all of the properties 5, 6, and 7, the porous carbon support may have excellent oxidation resistance in which a mass reduction rate at a temperature within a range of 500°C to 700°C in a thermogravimetric analysis (TGA) is at a level of 0% to 30%, specifically, at the level of 2 to 28%, or 10 to 28%, or 15 to 25%, or 18 to 20%, or 21 to 23%.

In addition, when the porous carbon body has the above-described pore structure and the crystallinity satisfying all of the properties 5, 6, and 7, the porous carbon support may exhibit oxidation resistance at a high temperature within a range of 700°C to 740°C, specifically, a high temperature of 705°C to 730°C, or 710°C to 715°C, or 715°C to 725°C, at which a mass of 30% based on the raw material is reduced in a thermogravimetric analysis. Experimentally, the thermogravimetric analysis of porous carbon materials may be measured via ASTM E1131.

In a specific example, the porous carbon body may be an aggregate in which primary particles are randomly aggregated together, and the primary particles may include hollow particles. Accordingly, the pore structure of the porous carbon body described above may be formed by pores of the primary particles themselves, between the primary particles, between a portion of the aggregates and the primary particles, between a portion of the aggregates and a portion of the aggregates, and between the aggregates. An average primary particle size of the porous carbon body may be 10 nm to 30 nm. In this case, the average primary particle size may be measured according to ASTM D3849.

In a specific embodiment, the porous carbon body may be doped with a heterogeneous element. The heterogeneous element may include one or more elements selected from a metalloid, a non-metal (excluding carbon), and a transition metal. The metalloid may include one or more elements selected from B, Si, Ge, As, Sb, Te, and Po, and the non-metal may include one or more elements selected from N, O, P, S, and Se. The transition metal may include at least one element selected from metals belonging to groups 3 to 12, specifically metals belonging to 4 to 5 periods of groups 3 to 12 (e.g., Co, Fe, Ni, Cu, Zn, Cr, V, Ti, Sc, Y, Zr, Nb, Mo, Tc, Ru, Rh, Pd, Ag, Cd) and metals belonging to a lanthanide group (La, Ce, Pr, Nd, Pm, Sm, Eu, Gd, Tb, Dy, Ho, Er, Tm, Yb, Lu). When the porous carbon body is doped with a heterogeneous element, the porous carbon body may contain 0.05 to 5.00 mass% of the heterogeneous element. In detail, the porous carbon body may contain 0.05 to 5.00 mass % of a metalloid, 0.05 to 0.50 mass % of a non-metal, and/or 0.05 to 2.00 mass % of a transition metal. When used as a fuel cell catalyst support, the catalytic activity may be improved by doping with a heterogeneous element.

The present disclosure includes a catalyst for a fuel cell including the above-described porous carbon body.

The catalyst for a fuel cell according to the disclosure includes a support, the porous carbon body described above; and a catalyst material supported on the support.

The catalyst material may include a platinum-based catalyst, a non-platinum-based catalyst, or a mixture thereof, which is known to catalyze an oxidation reaction (e.g., oxidation of hydrogen) or a reduction reaction (e.g., reduction of oxygen) that occurs in a fuel cell. Representative examples of the platinum-based catalyst may include a platinum catalyst, an alloy catalyst between platinum-noble metals (Au, Ag, Pd, Ru, Rh, Ir, Os, etc.), an alloy catalyst between platinum non-noble metals (Ni, Fe, Co, Cr, Cu, Mn, V, Ti, Ta, Nb, Mg, Sn, Bi, Pb, Al, Mo, Nb, Ta, Zr, Ru, Se, etc.), an alloy catalyst between platinum-noble metals and platinum non-noble metals, a composite catalyst between a platinum-based metal and a metal oxide, a core-shell catalyst of a transition metal core-platinum shell, and the like. Representative examples of the non-platinum-based catalyst may include a non-platinum-based alloy catalyst such as an Ru-Ir alloy or a Pd-transition metal alloy, a transition metal (Ni, Fe, etc.)-N-based catalyst, a transition metal (Ni, Fe, etc.)-N-C-based catalyst, and the like. However, the porous carbon body described above is more advantageous for supporting a platinum-based catalyst since it provides a more effective pore structure for supporting a catalyst material having a size of clusters or several nanometers.

The catalyst material supported on the porous carbon body may be in the form of nanoparticles, and as a specific example, may be in the form of particles having a size of 0.5 nm to 4 nm.

The catalyst may contain 5 to 70 wt%, specifically 10 to 60 wt%, of a catalyst material, but the present disclosure is not limited by an amount of the catalyst material supported.

The present disclosure includes a catalyst layer for a fuel cell containing the porous carbon body described above.

A catalyst layer for a fuel cell according to the disclosure may include the porous carbon body described above, a catalyst material supported on the porous carbon body, and ionomer.

The present disclosure includes a catalyst layer for a fuel cell containing the catalyst described above.

A catalyst layer for a fuel cell according to the disclosure may include the above-described catalyst and ionomer.

The ionomer may be any polymeric material known to conduct ions involved in a fuel cell reaction. As a specific example, the ionomer may be a hydrogen ion-conducting ionomer. Examples of hydrogen ion-conducting ionomers may include known sulfonated block copolymers, perfluorinated polymers having sulfonate groups on the side chain, or sulfonated aromatic polymers. Ionomers may be commercial products, such as Nafion® (manufactured by DuPont), Aciplex® (manufactured by Asahi Kasei Co., Ltd.), and Plemion® (manufactured by Asahi Glass Co., Ltd.).

A content of the catalyst described above in the catalyst layer may be any amount that allows the desired catalytic performance to be stably implemented during an electrochemical reaction of the fuel cell, and the amount of catalyst typically contained in the fuel cell catalyst layer is sufficient. As a practical example, the catalyst layer may contain 10 to 90 wt%, specifically 30 to 90 wt%, of the above-described catalyst, but the present disclosure is not limited by the specific catalyst content in the catalyst layer.

If necessary, the catalyst layer may further include a carbon material together with the above-described catalyst and ionomer. The carbon material may include the above-described porous carbon body without a catalyst material introduced, a particulate conductive carbon material, a carbon material having one-dimensional nanostructures (e.g., carbon nanotubes or carbon fibers), a carbon material having two-dimensional nanostructures (e.g., graphene, reduced graphene oxide, graphene oxide, etc.), or a mixture thereof.

The present disclosure includes a membrane-electrode assembly including the catalyst layer described above.

A membrane-electrode assembly according to the present disclosure may include an anode, a cathode, and an electrolyte membrane interposed between the anode and the cathode. The anode may include a first gas diffusion layer and a first catalyst layer, and the cathode may include a second gas diffusion layer and a second catalyst layer. In this case, the first catalyst layer of the anode and the second catalyst layer of the cathode may be disposed to be in contact with the electrolyte membrane.

At least one of the first catalyst layer and the second catalyst layer may contain the porous carbon body described above or the catalyst described above. In practice, at least one of the first catalyst layer and the second catalyst layer may be the catalyst layer for a fuel cell described above.

If necessary, a microporous layer for improved water repellent properties may be further provided between the gas diffusion layer and the catalyst layer in the anode or cathode, but the present disclosure is not limited to a spherical structure of a membrane-electrode assembly.

A gas diffusion layer may be formed of any material commonly used in the field of a fuel cell. Representative examples of gas diffusion layers may include polyethylene terephthalate and carbon paper with water-repellent properties, but an embodiment thereof is not limited thereto.

An electrolyte membrane may be any known membrane commonly used in the field of a fuel cell to conduct the desired ions. As a practical example, the electrolyte membrane may be a hydrogen ion conductive electrolyte membrane, and representative examples of the hydrogen ion conductive electrolyte membrane may include a sulfonated block copolymer, a perfluorinated polymer having a sulfonate group on the side chain, or a sulfonated aromatic polymer, and representative examples of commercial products include Nafion® (manufactured by DuPont), Aciplex® (manufactured by Asahi Kasei Co., Ltd.), and Flemion® (manufactured by Asahi Glass Co., Ltd.).

The present disclosure includes a fuel cell including the above-described porous carbon body, the above-described catalyst, the above-described catalyst layer, or the above-described membrane electrode assembly.

The present disclosure includes a fuel cell stack in which a plurality of unit cells is stacked, using the above-described membrane electrode assembly as a unit cell. In this case, each unit cell to be stacked may be located between separators in which a flow path is formed.

The present disclosure includes a method for manufacturing the porous carbon body described above.

A method for manufacturing a porous carbon body according to a specific example may include: S1) an operation of heat treating a carbon raw material at a temperature within a range of 1000°C to 3000°C to remove impurities and crystallize the raw material; S2) an operation of pretreating a carbon raw material from which impurities have been removed and crystallized at a temperature within a range of 500°C to 1000°C for 200 to 500 minutes in an atmosphere containing at least one heterogeneous element selected from the group consisting of boron, carbon, nitrogen, oxygen, phosphorus, and sulfur to introduce an activated site doped with the heterogeneous element; S3) an operation of mixing an additive including an organic surfactant into a carbon raw material into which the activated site has been introduced, and then removing heterogeneous elements by performing a heat treatment at a temperature within a range of 500°C to 1000°C for 200 to 400 minutes to activate the carbon raw material; S4) an operation of washing and then drying the activated carbon raw material; and S5) an operation of heat treating the washed and dried activated carbon raw material at a temperature within a range of 1200°C to 1700°C in an inert atmosphere to close pores.

Operations S1) to S4) may be processes for primarily aiming to form multiple pores forming a large number of mesopores and macropores, while improving the crystallinity of a carbon raw material, and operation S5) may be a process of closing openings of the pores formed in operations S1) to S4) to convert the pore shape into a bottleneck-shaped pore.

In detail, after a carbon raw material is highly crystallized through operation S1), a large amount of heterogeneous elements may be inserted into a carbon molecular structure through operation S2), to form an unstable site (a site with relatively high energy) within highly crystallized carbon. In the activation operation (S3), a relatively high frequency of activation reaction is induced at an unstable site formed in the highly crystallized carbon structure, which can improve crystallinity and yield, and together therewith, since the unstable site acts as a site where pores are formed, a carbon body satisfying both porosity and high crystallinity with well-developed mesopores or macropores may be manufactured. Thereafter, by converting the pores formed in the carbon body into a bottleneck shape through a high-temperature heat treatment in operation S5), a porous carbon body having a well-developed pore structure with a wide range of bottleneck pores in a wide range of sizes may be manufactured.

In detail, operation S1) is a process of heat treating a carbon raw material to remove impurities and crystallize the carbon raw material, which allows heterogeneous elements to effectively penetrate into the carbon raw material in operation S2). Here, impurities refer to materials other than carbon existing on the surface or inside of the carbon raw material. Examples based on materials may include petroleum residues and other functional groups, and examples based on elements may include elements other than carbon (boron, carbon, nitrogen, oxygen, phosphorus, sulfur, etc.), but an embodiment thereof is not limited thereto. In operation S1), as a lattice constant of the carbon raw material increases, crystallization can occur for a portion or all of the raw material.

In a specific example, the carbon raw material may be an amorphous carbon such as hard carbon such as cellulose, phenolic resin, isotropic pitch, and the like; a soft carbon such as mesophase pitch, needle coke, and the like; a crystalline carbon such as artificial graphite, natural graphite, and the like; and specifically, an amorphous carbon, and more specifically, soft carbon. Soft carbon is relatively anisotropic compared to hard carbon, and carbon layer planes are arranged parallel to each other, so crystallization, i.e., graphitization can occur through heat treatment at 1000°C or higher. In some cases, a carbon raw material may include a carbon nano tube (CNT) and a carbon nano fiber (CNF).

Operation S1) may be performed at a temperature within a range of 1000°C to 3000°C for 10 minutes or more, under vacuum or in an inert gas (nitrogen, argon, neon, helium, etc.) atmosphere. These conditions are for crystallizing carbon while removing impurities other than carbon present in the carbon raw material. In detail, operation S1) may be performed at a temperature within a range of 1000°C to 2000°C, more specifically at 1000 to 1800°C, for 10 to 100 minutes, in a vacuum or inert gas atmosphere.

Operation S2) is a process of introducing a predetermined heterogeneous element into a carbon raw material from which impurities have been removed and crystallized. In this process, the carbon raw material may be selectively replaced with the heterogeneous element starting from a portion with low crystallinity therein. An introduction point of the heterogeneous element may serve as an initiation point of the reaction in a subsequent activation process, and may also act as a point where micropores are formed.

The pretreatment in operation S2) may be performed by heat treatment at a temperature within a range of 500°C to 1000°C for 200 to 500 minutes, specifically, at a temperature within a range of 500°C to 800°C for 250 to 400 minutes, in an atmosphere including at least one heterogeneous element selected from the group consisting of boron, carbon, nitrogen, oxygen, phosphorus, and sulfur supplied at 100 to 600 sccm. By performing a pretreatment at a relatively low temperature for a longer period of time in an atmosphere in which a large amount of heterogeneous elements are supplied, a large amount of heterogeneous elements may be introduced into a carbon body.

As a practical example, the heterogeneous element may be at least one selected from the group consisting of boron, carbon, nitrogen, oxygen, phosphorus and sulfur.

Operation S3) is a process in which heterogeneous elements inserted in the pretreatment operation acts as a reaction initiation point to form pores, and by the reaction between the corresponding heterogeneous elements and additives in operation S3), a micropore structure in which mesopores with a size of micro to several nanometers are mainly developed may be formed. In addition, since the doped heterogeneous element in a portion having weak crystallinity may be removed through the activation process, the crystallinity may be improved and pores may be formed, ultimately producing a carbon body having a highly porous structure and exhibiting high crystallinity.

A mixture of a carbon raw material into which an activated site has been introduced and an additive may include 0.1 to 10 parts by weight of an inorganic or organic surfactant, 0.1 to 10 parts by weight of an alkali metal hydroxide, and 1 to 10 parts by weight of neutral water, based on 100 parts by weight of the carbon raw material into which an activated site has been introduced. Specifically, the mixture may include 0.5 to 5 parts by weight of an organic surfactant, 0.5 to 5 parts by weight of an alkali metal hydroxide, and 1 to 8 parts by weight of neutral water, based on 100 parts by weight of a carbon raw material into which an activated site has been introduced.

The alkali metal hydroxide may be one or more selected from the group consisting of LiOH, NaOH, KOH, RbOH and CsOH, but an embodiment thereof is not limited thereto. The organic surfactant may be at least one of SDBS, SDS, LDS, CTAB, DTAB, PVP, Triton X-series, Brij-series, Tween-series, poly(acrylic acid), and polyvinyl alcohol, but an embodiment thereof is not limited thereto.

A heat treatment in operation S3) may be performed at a temperature within a range of 500 to 1000°C for 200 to 400 minutes in an inert gas atmosphere. Specifically, the heat treatment may be performed at a temperature within a range of 600 to 900°C for 250 to 400 minutes.

Operation S4) is an operation of washing and then drying the activated carbon raw material obtained in operation S3). Washing may be performed using acid, base, water, etc. until pH of a carbon raw material aqueous dispersion reaches 5 to 9, specifically, pH 6 to 8. Drying may be performed at a temperature within a range of 70 to 120°C and atmospheric pressure conditions for 10 to 20 hours, and then at a temperature within a range of 80 to 150°C and vacuum conditions for 1 to 5 hours, but an embodiment thereof is not limited thereto. It is sufficient that drying in operation S4) is performed under conditions that can sufficiently remove moisture from a carbon body (intermediate product).

A pore closing treatment in operation S5) may be performed at 1200 to 1700°C for 10 to 1500 minutes, under vacuum or in an inert gas (nitrogen, argon, neon, helium, etc.) atmosphere. In detail, operation S5) may be performed in a vacuum or inert gas atmosphere at 1200°C to 1600°C and for 10 minutes to 1200 minutes. When performing the pore closing treatment in operation S5), a temperature increase rate may be 1°C/min to 10°C/min, and cooling after the pore closing treatment may be air cooling.

(Example 1)

A carbon raw material (Li-435, Denka Company Limited) was heated at 1000°C under an argon atmosphere for 30 minutes to perform a crystallization treatment. Thereafter, a mixed gas of oxygen and nitrogen gas (50 vol% of oxygen and 50 vol% of nitrogen in the gas) was supplied to the crystallized carbon raw material at a flow rate of 300 sccm, and a process of introducing an activated site was performed by heat treatment at a temperature of 600°C for 5 hours. Thereafter, 1 part by weight of an organic surfactant (Triton X-100), 1 part by weight of potassium hydroxide, and 3 parts by weight of neutral water were added to the carbon raw material into which the activated site has been introduced, and the mixture was stirred for 300 minutes and then dried with hot air to prepare a mixture. The prepared mixture was then heat treated (activated) at 700°C for 300 minutes in a nitrogen atmosphere. Hydrochloric acid, ammonia water, and neutral water were sequentially added to the activated sample, stirred for more than 30 minutes, and then washed by vacuum filtration. During washing, the hydrochloric acid and ammonia water processes were performed once each, and hydrochloric acid was added in an amount 1 time greater than a weight of potassium hydroxide used previously, and ammonia water was added in an amount 1 time greater than a weight of hydrochloric acid used previously. The washing process using neutral water was repeated until pH of a solution reached the range of 6 to 8 during stirring. Finally, when the pH reached the target, drying was performed for 12 hours or more at 120°C and atmospheric pressure conditions, and then additional drying was performed for 1 hour or more at 120°C and vacuum conditions. After additional drying, the recovered carbon body was heat treated at 1600°C for 450 minutes in a nitrogen atmosphere (pore closing treatment, heating rate = 5°C/min, air cooling) to prepare a porous carbon body.

(Examples 2 to 4)

A porous carbon body was prepared in the same manner as in Example 1, except that the pore closing treatment was performed under the conditions in Table 1.

(Table 1)

|  | PORE CLOSING TREATMENT | |
|---|---|---|
|  | TEMPERATURE (°C) | TIME (min) |
| EXAMPLE2 | 1600 | 300 |
| EXAMPLE3 | 1600 | 10 |
| EXAMPLE4 | 1400 | 1200 |
| EXAMPLE3 | 1400 | 600 |

The prepared porous carbon body was analyzed under the following conditions.

Nitrogen adsorption/desorption measurement

A nitrogen adsorption-desorption isotherm may be obtained by measuring a change in nitrogen adsorption amount on a porous carbon body according to a change in nitrogen gas pressure at a temperature of 77 K.

Experimentally, nitrogen adsorption/desorption isotherms were measured based on ASTM D6556.

In detail, in addition to ASTM D6556, sample preparation to obtain nitrogen adsorption/desorption isotherms was as follows:

1) Weigh 300 mg of a porous carbon sample,
2) Dry the sample at 200°C and under vacuum of 0.1 Torr or less for 12 hours,
3) Measure a nitrogen adsorption/desorption isotherm using a surface area measuring device (e.g., Micromeritics, ASAP 2460).

In addition to ASTM D6556, measuring conditions for obtaining nitrogen adsorption/desorption isotherms were as follows:

Nitrogen adsorption gas, temperature of 77K using liquid nitrogen, accuracy for measuring relative pressure ($P/P_0$) of 0.02, and range of relative pressure ($P/P_0$) of 0 to 1.

BJH method based on Harkins-Jurassic equation

Using the BJH method, a nitrogen relative pressure ($P/P_0$) of the adsorption/desorption isotherm was converted into a pore size (mm), a nitrogen adsorption amount ($cm^3/g$ STP) was converted into a pore volume ($cm^3/g$) to obtain pore size distribution. In this case, when converting the relative pressure into a pore size, correction was performed using a Harkins-Jura thickness curve. In addition, Faas correction, a standard BJH correction, was performed along with the Harkins-Jura thickness curve. For adsorption isotherms, the transition from the pore size to the pore volume occurred in the pore size range of 1.7 to 300 nm, and for desorption isotherms, in the pore size range of 2.0 to 50 nm.

X-ray Diffraction Measurement

An X-ray diffraction pattern of the porous carbon body was obtained by applying ASTM D5357 standard and using a conventional X-ray diffraction measuring device (e.g., RIGAKU, SmartLab SE) under the following measurement conditions:

0.5 g of porous carbon powder, Cu K$\alpha$ line, scan range of 10 to 70°, scan speed of 5.0°/min, scan step size of 0.03°.

d002, La, Lc using X-ray diffraction pattern of porous carbon body

$d_{002}$ is an average interlayer spacing (nm) of a porous carbon body based on a (002) plane, and is calculated by Bragg's law ($d_{002} = \lambda/2\sin\theta_{002}$, $\lambda$=X-ray wavelength (nm)).

A crystalline height ($L_c$, nm) and a crystalline length ($L_a$, nm), which determine a crystalline size in a porous carbon body, were calculated by the following Scherrer equation.

$$\texttt{crystalline size(nm)=(k} \cdot \lambda\texttt{)/(}\beta_0 \cdot \cos\theta\texttt{)}$$

$L_a$ is a k (shape factor) of 1.84, $\beta_0$ is a full width at half maximum (radian) of a (100) peak in an X-ray diffraction pattern of a porous carbon body, $\lambda$ is an X-ray wavelength (nm), $\theta$ is a diffraction angle of (100) (Bragg angle, radian).

$L_c$ is a k (shape factor) of 0.9, $\beta_0$ is a full width at half maximum (radian) of a (002) peak in an X-ray diffraction pattern of a porous carbon body, $\lambda$ is an X-ray wavelength (nm), $\theta$ is a diffraction angle of (002) (Bragg angle, radian).

Using the prepared porous carbon body, a catalyst, a CCM, and a half cell were prepared under the following conditions, and the electrochemical properties thereof were analyzed.

Preparation of catalyst

0.75 g of a porous carbon body was dispersed in 388.2 g of a mixture of ethylene glycol (EG) and water (water:EG weight ratio = 1:1) to prepare a dispersion, and then 4.95 g of a 20 wt% platinum precursor aqueous solution was added to the prepared dispersion to prepare a mixed solution. The prepared mixed solution was heated at 105°C for 1 hour to support platinum particles on the porous carbon body. Thereafter, the mixed solution was cooled to room temperature, and the porous body having the platinum particles supported thereon was filtered, and then washed sufficiently with distilled water, and dried at a temperature of 250°C in a vacuum dryer to produce a catalyst.

Half-cell evaluation

Electrochemical measurement was performed at room temperature using a 0.1 M of $HClO_4$ aqueous electrolyte, a reference electrode of Ag/AgCl (saturated KCl, 3M), and a counter electrode of platinum wire, and a rotating disk electrode (RDE) connected to an electrochemical analyzer (ALS Japan; Serial number MD2503) as a working electrode. All potentials are based on a reversible hydrogen electrode (RHE), and to this end, a potential of an Ag/AgCl reference electrode was corrected to a potential based on the RHE ($V_{RHE}$). (Correction method: After purging high-purity hydrogen gas into a 0.1 M of $HClO_4$ aqueous solution electrolyte for 30 minutes, both the working electrode and the counter electrode were connected with platinum wires, and an open circuit voltage (OCV) was measured with respect to the Ag/AgCl reference electrode. Correction was performed to the RHE reference potential based on the OCV values measured during all half-cell evaluations.)

The prepared catalyst was added to distilled water, Nafion (5 wt%), and isopropyl alcohol (IPA) and dispersed ultrasonically to prepare a catalyst ink. A mass ratio of catalyst to Nafion in the catalyst ink was 10:3. The catalyst ink prepared using a micropipette was loaded onto a glassy carbon RDE electrode (5 mm) at 100 $\mu$g/cm$^2$ based on platinum, and then dried at room temperature to prepare a working electrode. Before ORR and CV measurements, the catalyst was electrochemically activated at a voltage scan rate of 100 mV/s in a voltage range of 0.05 to 1.05 $V_{RHE}$ in a nitrogen-saturated 0.1 M of $HClO_4$ electrolyte.

Cyclic voltammetry (CV) measurement was performed at a voltage scan rate of 20 mV/s in the voltage range of 0.05 to 1.05 $V_{RHE}$ after purging with high-purity nitrogen gas for 30 min.

An electrochemically active surface area (ECSA) was calculated using a hydrogen desorption area of 0.05 to 0.4 $V_{RHE}$.

Oxygen reduction reaction (ORR) measurement was performed using linear scanning voltammetry (LSV) under the conditions of an RDE rotation speed of 1600 rpm and a voltage scan rate of 5 mV/s in the voltage range of 0.05 to 1.05 $V_{RHE}$ after purging with high-purity oxygen gas for 30 minutes.

A mass activity (MA) value of the catalyst was measured using linear scanning voltammetry (LSV) in a 0.1 M of $HClO_4$ aqueous solution saturated with high-purity oxygen gas at 0.9 $V_{RHE}$. To measure the MA value, a kinetic current was calculated using the Koutecky-Levich equation (ik = (i × id)/(id- i). As is known, in the equation, ik is a kinetic current, i is measured current by an electrochemical analyzer, and id is a diffusion-limited current.

An accelerated stress test (AST) was performed to test the durability of the catalyst. The AST was performed in a 0.1 M of $HClO_4$ aqueous solution saturated with high-purity nitrogen gas by cyclic voltammetry (CV) in a voltage range of 0.6 to 1.0 $V_{RHE}$ with a voltage scan rate of 100 mV/s for 10k cycles. The durability of the catalyst was compared by comparing the ECSA values and MA@0.9V values before and after the AST.

In order to compare with the porous carbon body prepared in the examples, the crystallinity and pore characteristics of a commercial carbon body were analyzed in the same manner as in the analysis of the porous carbon body. In addition, a catalyst and a half-cell were manufactured using the commercial carbon body in the same manner as the porous carbon body, and the electrochemical characteristics were evaluated. The commercial carbon bodies used for the comparison were Li-250(Denka Company Limited), Li-400(Denka Company Limited), Li-435(Denka Company Limited), MH-00 (CNovel™, TOYO TANSO) , MH-18 (CNovel™, TOYO TANSO), and MH-18_2$\mu$m(CNovel™, TOYO TANSO).

Hereinafter, when referring to the results measured using each commercial carbon body or porous carbon body prepared in the examples, only a specific product name of the commercial carbon body or the example number is used. For example, the electrochemical characteristics of a half-cell manufactured using MH-18(CNovel™, TOYO TANSO) as a Pt support may be referred to as the electrochemical characteristics of MH-18. For example, a cumulative delta graph of MH-18(CNovel™, TOYO TANSO) may be referred to as a cumulative delta graph of MH-18. For example, electrochemical characteristics of a porous carbon body prepared in Example 1, a catalyst manufactured using the porous carbon body as a Pt support, and a half-cell may be referred to as the electrochemical characteristics of Example 1 of the porous carbon body of Example 1, the catalyst of Example 1, and the half-cell of Example 1.

A surface area of 2 to 5 nm (SSA1, m$^2$/g), a surface area of 2 to 100 nm (SSA2, m$^2$/g), $d_{002}$ (nm), $L_a$(nm), and the average number of graphite layers (average number of layers, pieces) of the porous carbon bodies prepared in the examples and comparative samples were measured and summarized in Table 2.

(Table 2)

|  | SSA1 | SSA2 | $d_{002}$ | $L_a$ | THE AVERAGE NUMBER OF LAYERS |
|---|---|---|---|---|---|
| EXAMPLE1 | 237.75 | 400.04 | 0.35 | 9.27 | 9.6 |
| EXAMPLE2 | 180.73 | 425.36 | 0.35 | 9.17 | 9.86 |
| EXAMPLE3 | 126.46 | 416.99 | 0.35 | 8.74 | 9.9 |
| EXAMPLE4 | 242.89 | 527.55 | 0.35 | 8.65 | 9.9 |
| EXAMPLE3 | 229.69 | 618.72 | 0.35 | 8.81 | 9.7 |
| Li-250 | 23.22 | 45.86 | 0.350 | 8.15 | 8.65 |

(continued)

|  | SSA1 | SSA2 | $d_{002}$ | $L_a$ | THE AVERAGE NUMBER OF LAYERS |
|---|---|---|---|---|---|
| Li-400 | 18.13 | 35.30 | 0.353 | 7.52 | 7.94 |
| Li-435 | 60.91 | 121.08 | 0.351 | 8.24 | 8.78 |
| MH-00 | 1317.11 | 1622.43 | 0.362 | 3.96 | 3.07 |
| MH-18 | 1027.47 | 1255.75 | 0.345 | 7.49 | 17.00 |
| MH-18_2$\mu$m | 1066.94 | 1305.47 | 0.342 | 7.58 | 11.49 |

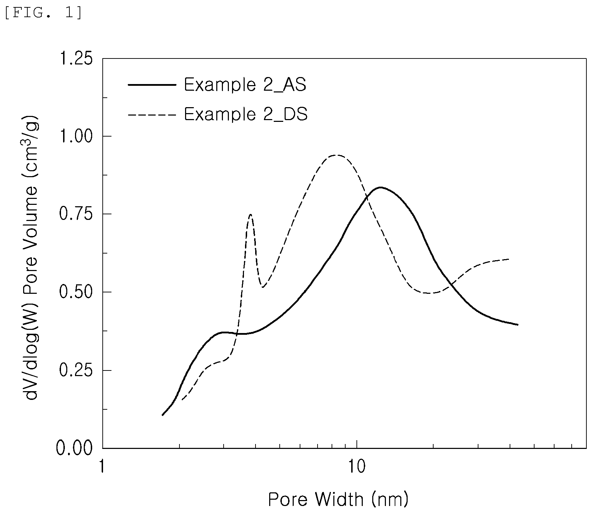

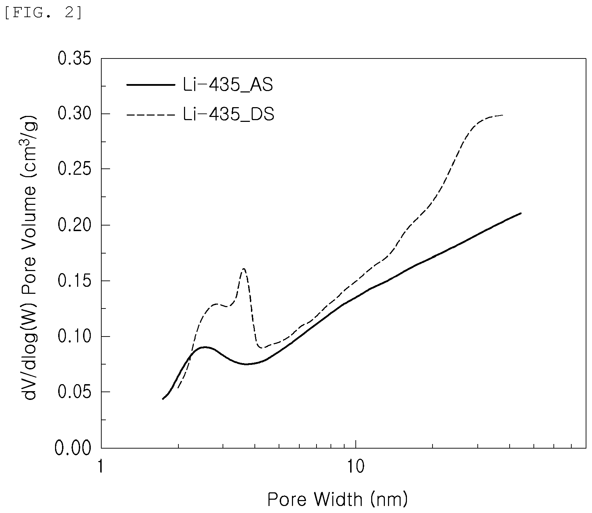

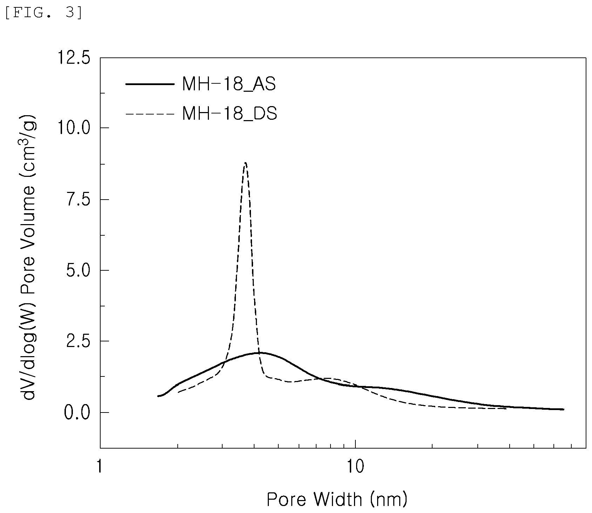

FIG. 1 is a diagram illustrating a superimposed graph of a porous carbon body of Example 2. A superimposed graph of a comparative sample was also shown in FIG. 2 (superimposed graph of Li-435 sample) and FIG. 3 (superimposed graph of MH-18 sample).

All of the porous carbon bodies prepared in the examples had three intersection points in the range of 2 to 50 nm in the superimposed graph as shown in FIG. 1, and thus had two closed curves. On the other hand, the comparative samples, similar to FIGS. 2 and 3, had no or more than three intersection points (five intersection points) in the 2 to 50 nm range for all samples.

The number of intersection points in the porous carbon body prepared in the examples, a position of P1 (nm), a position of P2 (nm), a position of P3 (nm), and a difference between the positions of P3 and P2 (P3-P2, nm) are summarized in Table 3. In addition, an area of a closed curve of P1-P2 ($A_{cl1}$), an area ($A_{cl2}$) of a closed curve of P2-P3, and an area ratio ($A_{cl2}/A_{cl1}$) are summarized in Table 4.

(Table 3)

|  | P1 | P2 | P3 | P3-P2 |
|---|---|---|---|---|
| EXAMPLE1 | 3.27 | 7.55 | 18.25 | 10.70 |
| EXAMPLE2 | 3.37 | 10.89 | 23.73 | 12.84 |
| EXAMPLE3 | 3.53 | 17.32 | 31.71 | 14.39 |
| EXAMPLE4 | 3.09 | 7.28 | 16.46 | 9.18 |
| EXAMPLE3 | 3.37 | 10.50 | 22.82 | 12.32 |

(Table 4)

|  | $A_{C11}$ | $A_{C12}$ | $A_{C12}/A_{C11}$ |
|---|---|---|---|
| EXAMPLE1 | 0.84 | 1.14 | 0.73 |
| EXAMPLE2 | 1.74 | 1.86 | 0.94 |
| EXAMPLE3 | 3.63 | 1.63 | 2.23 |
| EXAMPLE4 | 1.33 | 2.67 | 0.50 |
| EXAMPLE5 | 2.90 | 3.12 | 0.93 |

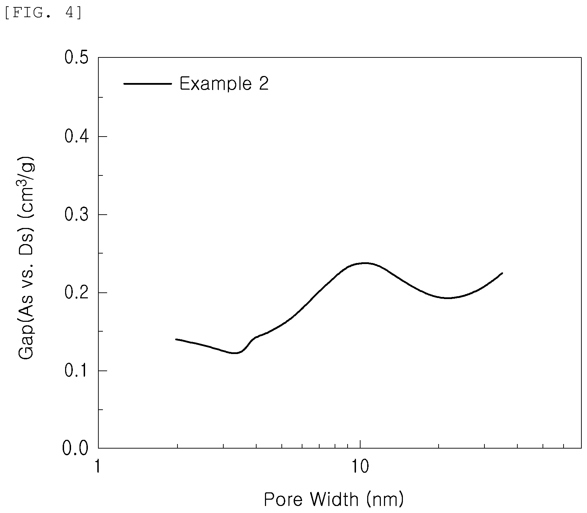

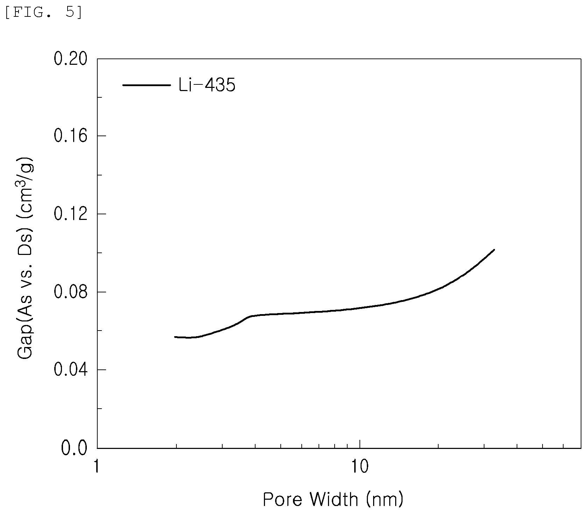

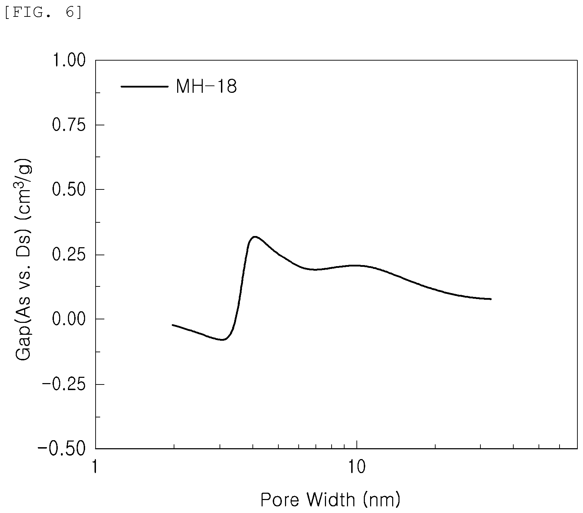

FIG. 4 is a diagram illustrating a cumulative delta graph of a porous carbon body of Example 2. A cumulative delta graphs of a comparative samples are also illustrated in FIG. 5 (cumulative delta graph of Li-435 sample) and FIG. 6 (cumulative delta graph of MH-18 sample).

All of the porous carbon bodies prepared in the examples had a cumulative delta graph, as shown in FIG. 4, located in a positive Y-axis region without any intersection point with an X-axis, and were comprised of four regions: a first decreasing region, a first increasing region, a second decreasing region, and a second increasing region, and had one maximum point formed between the first increasing region and the second decreasing region. On the other hand, the comparison samples had cumulative delta graphs, similar to FIGS. 2 and 3, having a form in which all samples are simply increasing, a form of having an intersection point with an X-axis (0 or negative value is present) or a form of having two or more maximum points.

In the porous carbon body prepared in the examples, a minimum value ($cm^3/g$, Min) of the cumulative delta graph in the range of 2 to 30 nm, a boundary position between the first increasing region and the second decreasing region (nm, 1-2 boundary), and a boundary position between the second decreasing region and the second increasing region (nm, 2-2 boundary) are summarized in Table 5.

(Table 5)

|  | Min | 1-2 BOUNDARY | 2-2 BOUNDARY |
|---|---|---|---|
| EXAMPLE1 | 0.08 | 7.17 | 15.60 |
| EXAMPLE2 | 0.12 | 11.08 | 22.27 |
| EXAMPLE3 | 0.18 | 15.69 | 28.19 |
| EXAMPLE4 | 0.10 | 8.30 | 17.93 |
| EXAMPLE5 | 0.37 | 9.46 | 20.00 |

The electrochemical characteristics of a half-cell (electrochemical surface area ESCA and mass activity MA) provided with catalysts manufactured using the porous carbon bodies prepared in examples and the carbon bodies of comparative samples are summarized in Table 6 (initial) and Table 7 (after AST), and an ESCA retention rate and a MA retention rate after an accelerated stress test are also shown.

(Table 6)

|  | INITIAL | |
|---|---|---|
|  | ESCA ($m^2/g_{Pt}$) | MA@0.9V ($A/mg_{Pt}$) |
| EXAMPLE1 | 64.3 | 0.261 |
| EXAMPLE2 | 69.5 | 0.264 |
| EXAMPLE3 | 73.3 | 0.299 |
| EXAMPLE4 | 60.1 | 0.237 |
| EXAMPLE5 | 75.3 | 0.278 |
| Li-250 | 40.5 | 0.095 |
| Li-400 | 39.1 | 0.092 |
| Li-435 | 49.9 | 0.105 |
| MH-00 | 55.4 | 0.111 |
| MH-18 | 57.4 | 0.127 |
| MH-18_2$\mu$m | 57.8 | 0.131 |

(Table 7)

|  | AFTER AST | | | |
|---|---|---|---|---|
|  | ESCA ($m^2/g_{Pt}$) | MA@0.9V ($A/mg_{Pt}$) | ESCA RETENTION RATE (%) | MA RETENTION RATE (%) |
| EXAMPLE1 | 56.6 | 0.221 | 88.02 | 84.67 |
| EXAMPLE2 | 60.9 | 0.218 | 87.63 | 82.58 |
| EXAMPLE3 | 61.2 | 0.245 | 83.49 | 81.94 |
| EXAMPLE4 | 54.2 | 0.207 | 90.18 | 87.34 |
| EXAMPLE5 | 64.4 | 0.238 | 85.52 | 85.61 |
| Li-250 | 29.1 | 0.061 | 71.9 | 64.2 |
| Li-400 | 28.4 | 0.064 | 72.6 | 69.6 |
| Li-435 | 35.8 | 0.071 | 71.7 | 67.6 |
| MH-00 | 39.4 | 0.071 | 71.1 | 64.0 |

(continued)

| | AFTER AST | | | |
|---|---|---|---|---|
| | ESCA ($m^2/g_{Pt}$) | MA@0.9V ($A/mg_{Pt}$) | ESCA RETENTION RATE (%) | MA RETENTION RATE (%) |
| MH-18 | 40.3 | 0.078 | 70.2 | 61.4 |
| MH-18_2$\mu$m | 42.3 | 0.094 | 73.2 | 71.8 |

The embodiment is only an example and the present disclosure is not limited thereto. Anything that has substantially the same configuration as the technical idea described in the claims of the present disclosure and achieves the same operational effect is included in the technical scope of the present disclosure.

**Claims**

1. Provided is a porous carbon body, the porous carbon body satisfying the following properties:

   Property 1: a surface area of pores having a size of 2 nm or more to 5 nm or less obtained by an $N_2$ desorption isotherm based on a Barrett-Joyner-Halenda (BJH) method based on a Harkins-Jura equation is 100 $m^2$/g to 500 $m^2$/g,
   Property 2: a surface area of pores having a size of 2 nm or more to 100 nm or less obtained by an $N_2$ desorption isotherm based on a BJH method based on a Harkins-Jura equation is 200 $m^2$/g to 1500 $m^2$/g,
   Property 3: based on a BJH method based on a Harkins-Jura equation, a superimposed graph of a first pore volume distribution graph obtained by a nitrogen adsorption isotherm and a second pore volume distribution graph obtained by a nitrogen desorption isotherm has three intersection points of P1, P2, and P3 sequentially in a direction in which a diameter thereof increases in a pore diameter range of 2 to 50 nm.

2. The porous carbon body of claim 1, wherein the P3 is located in a pore diameter range of more than 10 nm to less than or equal to 40 nm.

3. The porous carbon body of claim 2, wherein the P2 is located in a pore diameter range of 5 nm to 25 nm.

4. The porous carbon body of claim 1, wherein in the superimposed graph, an area ratio of an area of a closed curve from P2 to P3 divided by an area of a closed curve from P1 to P2 is 2.5 or less.

5. The porous carbon body of claim 1, wherein the porous carbon body further satisfies the following property 4,
   Property 4: based on a BJH method based on a Harkins-Jura equation, in a first pore cumulative volume distribution obtained by a nitrogen adsorption isotherm and a second pore cumulative volume distribution obtained by a nitrogen desorption isotherm, a value obtained by subtracting a value of the second pore cumulative volume distribution from a value of the first pore cumulative volume distribution according to a pore diameter has a positive value in a pore diameter range of 2 to 30 nm.

6. The porous carbon body of claim 5, wherein a cumulative delta graph, which is a graph of the value obtained by subtracting the value of the second pore cumulative volume distribution from the value of the first pore cumulative volume distribution according to the pore diameter, sequentially includes a first decreasing region, a first increasing region, a second decreasing region, and a second increasing region in a direction in which the pore diameter increases.

7. The porous carbon body of claim 6, wherein a boundary between the first increasing region and the second decreasing region is located in a pore diameter range of 5 nm to 20 nm.

8. The porous carbon body of claim 6, wherein a boundary between the second decreasing region and the second increasing region is located in a pore diameter range of 10 nm to 30 nm.

9. The porous carbon body of claim 5, wherein the positive value is a value of 0.05 $cm^3$/g or more.

10. The porous carbon body of any one of claims 1 to 9, wherein the porous carbon body further satisfies the following property 5,

Property 5: an average interlayer spacing ($d_{002}$) measured by X-ray diffraction is 0.335 nm to 0.350 nm.

11. The porous carbon body of any one of claims 1 to 9, wherein the porous carbon body further satisfies the following property 6,
Property 6: an a-axis lattice constant ($L_a$) measured by X-ray diffraction is 4 nm to 10 nm.

12. The porous carbon body of any one of claims 1 to 9, wherein the porous carbon body is doped with a heterogeneous element.

13. A catalyst for a fuel cell including a catalyst material supported on the porous carbon body of any one of claims 1 to 9.

14. A catalyst layer for a fuel cell containing a catalyst of claim 13 and ionomer.

15. A polymer electrolyte membrane fuel cell including the catalyst of claim 13.

[FIG. 1]

[FIG. 2]

[FIG. 3]

[FIG. 4]

[FIG. 5]

[FIG. 6]

## INTERNATIONAL SEARCH REPORT

| International application No. |
| --- |
| **PCT/KR2023/022037** |

### A. CLASSIFICATION OF SUBJECT MATTER

**H01M 4/92**(2006.01)i; **H01M 4/90**(2006.01)i; **C01B 32/15**(2017.01)i

According to International Patent Classification (IPC) or to both national classification and IPC

### B. FIELDS SEARCHED

Minimum documentation searched (classification system followed by classification symbols)

H01M 4/92(2006.01); B01J 20/20(2006.01); C01B 31/02(2006.01); C01B 32/05(2017.01); H01M 4/86(2006.01); H01M 4/96(2006.01); H01M 8/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고분자 전해질막 연료전지(polymer electrolyte membrane fuel cell), 촉매(catalyst), 다공성 탄소체(porous carbon), Barrett-Joyner-Halenda, 질소 탈착 등온선(N2 desorption isotherm), 기공(pore), 표면적 (surface area), 질소 흡착 등온선(N2 adsorption isotherm)

### C. DOCUMENTS CONSIDERED TO BE RELEVANT

| Category* | Citation of document, with indication, where appropriate, of the relevant passages | Relevant to claim No. |
| --- | --- | --- |
| A | KR 10-2413206 B1 (THE INDUSTRY & ACADEMIC COOPERATION IN CHUNGNAM NATIONAL UNIVERSITY (IAC)) 24 June 2022 (2022-06-24)<br>See claims 12-13; paragraphs [0043], [0100], [0113] and [0130]-[0133]; and examples 1-2. | 1-15 |
| A | WO 2022-085693 A1 (NIPPON STEEL CHEMICAL & MATERIAL CO., LTD.) 28 April 2022 (2022-04-28)<br>See entire document. | 1-15 |
| A | JP 2009-518277 A (DREXEL UNIVERSITY et al.) 07 May 2009 (2009-05-07)<br>See entire document. | 1-15 |
| A | KR 10-1040428 B1 (HYUPJIN I&C CO., LTD.) 09 June 2011 (2011-06-09)<br>See entire document. | 1-15 |

☑ Further documents are listed in the continuation of Box C.   ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **11 April 2024** | **12 April 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
|---|---|
| | **PCT/KR2023/022037** |

### C. DOCUMENTS CONSIDERED TO BE RELEVANT

| Category* | Citation of document, with indication, where appropriate, of the relevant passages | Relevant to claim No. |
|---|---|---|
| A | JP 2018-030767 A (TOYOTA CENTRAL R&D LABS INC. et al.) 01 March 2018 (2018-03-01) See entire document. | 1-15 |

Form PCT/ISA/210 (second sheet) (July 2022)

**INTERNATIONAL SEARCH REPORT**
Information on patent family members

International application No.

**PCT/KR2023/022037**

| Patent document cited in search report | | | Publication date (day/month/year) | Patent family member(s) | | | Publication date (day/month/year) |
|---|---|---|---|---|---|---|---|
| KR | 10-2413206 | B1 | 24 June 2022 | KR | 10-2022-0022982 | A | 02 March 2022 |
| WO | 2022-085693 | A1 | 28 April 2022 | CN | 116391277 | A | 04 July 2023 |
| | | | | EP | 4231393 | A1 | 23 August 2023 |
| | | | | JP | 2022-066847 | A | 02 May 2022 |
| | | | | KR | 10-2023-0084187 | A | 12 June 2023 |
| | | | | US | 2023-0395817 | A1 | 07 December 2023 |
| JP | 2009-518277 | A | 07 May 2009 | EP | 1976627 | A2 | 08 October 2008 |
| | | | | JP | 2010-518277 | A5 | 04 February 2010 |
| | | | | US | 2009-0258782 | A1 | 15 October 2009 |
| | | | | WO | 2007-070455 | A2 | 21 June 2007 |
| | | | | WO | 2007-070455 | A3 | 07 February 2008 |
| KR | 10-1040428 | B1 | 09 June 2011 | KR | 10-2010-0132250 | A | 17 December 2010 |
| JP | 2018-030767 | A | 01 March 2018 | None | | | |

Form PCT/ISA/210 (patent family annex) (July 2022)